# EUROPEAN PATENT APPLICATION

(11) **EP 2 309 675 A1**
(43) Date of publication of application: **13.04.2011**
(21) Application number: 09802718.8
(22) Date of filing: 29.07.2009
(51) Int. Cl.: H04L 12/28, H04L 12/56, H04L 29/08

(54) **TCP TRANSMISSION CONTROL DEVICE AND TCP TRANSMISSION CONTROL METHOD**

(30) Priority: 30.07.2008 JP 2008196874
(71) Applicant: Panasonic Corporation, Kadoma-shi Osaka 571-8501 (JP)
(72) Inventor: TAKEI, Kentaro, Osaka 540-6207 (JP); KOBAYASHI, Hirokazu, Osaka 540-6207 (JP); SENGA, Satoshi, Osaka 540-6207 (JP); YAMADA, Kazushige, Osaka 540-6207 (JP)
(74) Representative: Grünecker, Kinkeldey, Stockmair & Schwanhäusser Anwaltssozietät
(86) International application number: PCT/JP2009/003596
(87) International publication number: WO 2010/013469

(57) **Abstract**

A TCP transmission control device enables high-efficiency TCP transmission for appliance integrated service provided via a home network. A TCP destination cache control unit (206) of a transmitting terminal (200) serving as the TCP transmission control device sets TCP transmission control information used for TCP connection set up, for an internal packet network, between the transmitting terminal (200) and a receiving terminal when the receiving terminal is present in the internal packet network. The TCP destination cache control unit (206) sets the TCP transmission control information according to the type of the service realized by TCP data transmission.

## Description

### Technical Field

The present invention relates to a TCP (transmission control protocol) transmission control device and a TCP transmission control method. More particularly, the present invention relates to an improvement on an efficient transmission control method for providing home electric appliance interaction services using TCP via an IP (Internet protocol) network.

### Background Art

When data delivery using TCP is performed on the Internet, change and difference in network conditions due to various causes such as delay, jitter and packet loss, should be taken into account. In addition, regarding terminals in the receiving side, it is necessary to presume wide-ranging support for various terminals having high capability and low capability. Conventional general TCP stacks have realized best-effort data delivery, using transmission control parameters for PCs (personal computers), assumed as communication terminals.

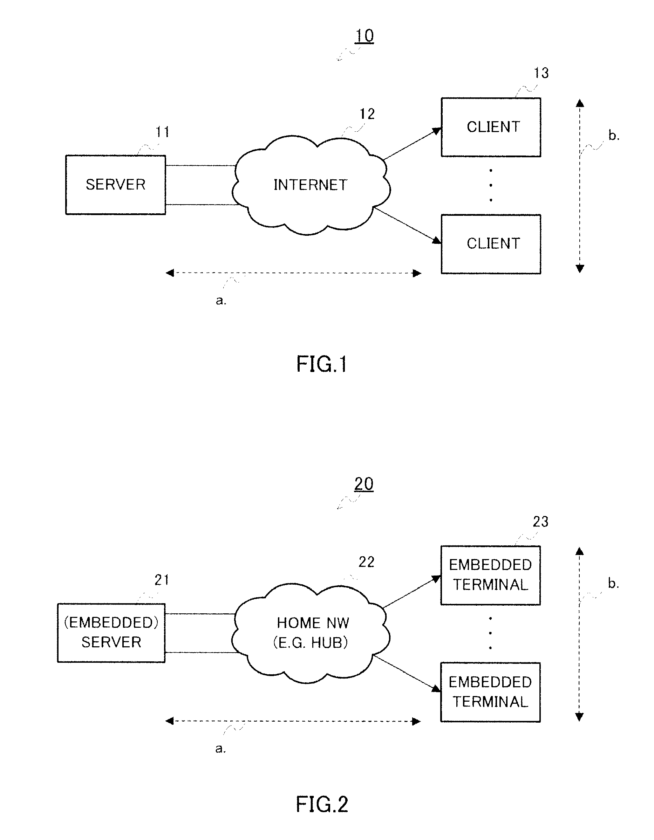

FIG. 1 shows a configuration of a conventional data communication system.

In FIG.1, data communication system 10 is configured to include server 11, internet 12 and a plurality of clients 13 connected to internet 12.

From server 11 through internet 12 to clients 13 indicated by a. in FIG.1, network (hereinafter abbreviated as "NW") conditions significantly vary, and therefore delay, jitter and packet loss occur. In addition, it is not possible to specify a delivery route per packet, so that the order of arrival of packets changes.

Moreover, clients 13 indicated by b. in FIG.1 are basically PC terminals and have high capability, and there is considerable variation in the capability. Clients 13 are naturally expected to provide best-effort services.

Conventional data communication system 10 should take into account various NW conditions and terminals on the Internet, and therefore, when performing data delivery according to TCP, uses maximally optimized setting to realize best-effort services.

FIG.2 shows a configuration of a conventional home network (home NW) system.

In FIG.2, home NW system 20 is configured to include embedded server 21, home NW 22 and a plurality of embedded terminals 23 connected to home NW 22.

From embedded server 21 through home NW 22 to embedded terminals 23 indicated by a. in FIG.2, communication is almost always performed by one hop, so that delay is small and the order of packets does not change.

In addition, embedded terminals 23 indicated by b. in FIG.2 basically have low capabilities. However, there are strict requirements for functions such as an AV playback function.

Anticipated NW conditions in home NW streaming services expected to be popular in future are greatly different from NW conditions in services on the Internet. In addition, embedded terminals showing lower performance than that of PCs are required to show quality for home electric appliances, not best-effort quality.
With normal processing, recovery takes time equal to or more than 200 ms, and therefore, when AV streaming is performed, discontinuity is highly likely to occur.

A parameter associated with retransmission processing when packet loss occurs is used as an example of a transmission control parameter in TCP.

With TCP, when a packet is lost on the network, the packet loss is detected by two methods, and retransmission is attempted.

One is a method of detecting packet loss by timeout and performing retransmission. When a transmitting terminal cannot receive acknowledgement (ACK) from a receiving terminal during a period of time defined by a parameter, which is referred to as "RTO (retransmission timeout)" after the transmitting terminal transmits a packet, the transmitting terminal determines that the packet is lost and retransmits that packet. A general TCP stack provides the minimum value for this retransmission timeout, where a value equal to or more than 200 ms is used as the minimum value. The reason for this is to prevent performing unnecessary retransmission processing by determining delay occurring when a receiving terminal side performs delay ACK processing, as packet loss.

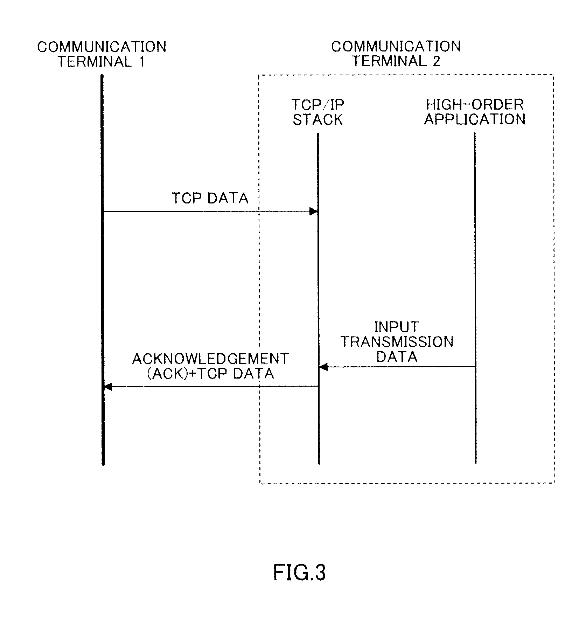

FIG.3 is a control sequence diagram showing an example of acknowledgment processing operations using conventional TCP.

As shown in FIG.3, when bidirectional data transmission is performed on one connection, a TCP stack may perform processing (piggyback) to improve the efficiency of communication, where the TCP stack does not immediately return ACK upon receiving a packet, waits for input of data transmitted from the upper-layer application for a certain period of time and transmits ACK and that data in the same packet as far as possible. By this means, delay until ACK transmission occurs in the receiving side, and therefore a transmitting terminal has to set retransmission timeout, taking into account this delay in the receiving terminal side.

The other packet loss detection method is a scheme referred to as "fast retransmission", where a transmitting terminal detects packet loss by duplicate acknowledgement transmitted when a receiving terminal detects the number of a packet missing in sequence numbers.

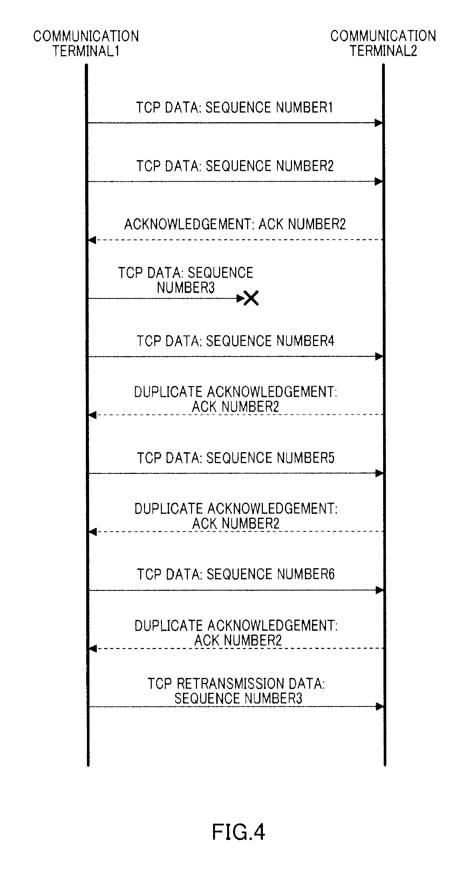

FIG.4 is a control sequence diagram showing an example of retransmission processing operations by a fast retransmission function using conventional TCP.

As shown in FIG.4, when the packet of sequence number 3 is lost on the network, a receiving terminal returns duplicate acknowledgment to a transmitting terminal every time the receiving terminal receives subsequent packets following the packet of sequence number 4. Normally, a transmitting terminal determines that a packet is lost in a case of receiving three duplicate acknowledgments, and retransmits that packet. A transmitting terminal does not perform retransmission until receiving three duplicate acknowledgments because packets take different routes on the Internet and the order of packets is likely to change, and it is necessary to prevent this change in the order of packets from being confused with packet lost that causes unnecessary retransmission processing.

By the way, anticipated network conditions in device interaction services in home networks that are expected to be popular in future, vary greatly from services on the Internet. In particular, in order to realize communication such as AV streaming, which should be performed in real time, quality for home electric appliances, not best-effort quality, is required, using embedded terminals of lower performance than PCs (see FIG.2). Therefore, it is necessary to perform transmission control suitable for services on home networks, not TCP transmission control assuming communication on the Internet.

Patent Literature I discloses a mobile communication system in which mobile terminals provide information of retransmission timeout to a server. In the device described in Patent Literature 1, at the time to establish TCP connection, a mobile device in the receiving side that receives TCP data delivery reports retransmission timeout to a server in the transmitting side, so that retransmission processing suitable for a network bearer is realized.

In addition, Patent Literature 2 discloses a mobile communication system that transmits segments with an option to change retransmission timeout, to a server. In the device described in Patent Literature 2, during establishment of TCP connection, a mobile device in the receiving side that receives TCP data delivery reports retransmission timeout to a server in the transmitting side to set adequate retransmission processing parameters even if a network bearer is changed due to handover and so forth during communication.

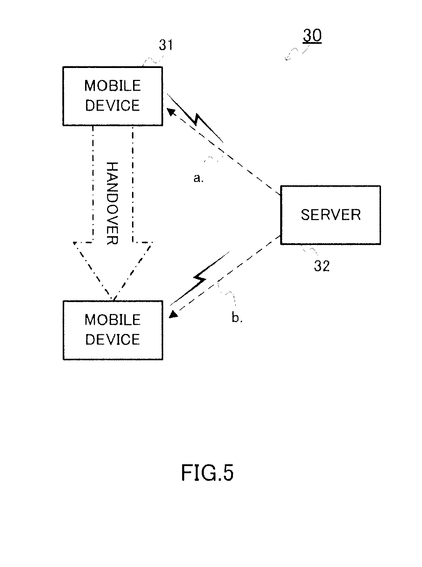

FIG.5 explains conventional control of retransmission timeout in the transmitting side, according to types of NWs.

In FIG.5, mobile communication system 30 is configured to include mobile devices 31 such as mobile telephones and server 32 connected to a mobile communication network between mobile devices 31 and a base station (not shown) by a radio communication channel.

From server 32 to mobile device 31 indicated by a. in FIG.5, at the time to establish TCP connection, mobile device 31 reports retransmission timeout according to the type of a bearer, to server 32, and server 32 performs TCP transmission using that value.

As indicated by b. in FIG.5, when a bearer is changed due to handover and so forth (for example, line switching ↔ packet switching), mobile device 31 reports that retransmission timeout will change to server 32 to change the retransmission timeout.

As described above, retransmission timeout when data is transmitted using TCP is set per type of bearer, so that it is possible to improve the efficiency of use of communication channels.

### Citation List

### Patent Literature

[PTL 1] Japanese Patent Application Laid-Open No.2003-102057
[PTL 2] Japanese Patent Application Laid-Open No.2003-224619

### Summary of Invention

### Technical Problem

However, this conventional mobile communication system has the following problems.

(1) A TCP transmission terminal cannot set retransmission timeout unless commanded from a receiving terminal using a unique protocol. That is, it is not possible to realize setting unless the receiving side commands setting each time.

(2) In addition, a transmitting terminal can set retransmission timeout per terminal, and, in a case in which a plurality of TCP connections are established between the transmitting terminal and one receiving terminal, even if different services are provided on TCP connections, respectively, and the optimal retransmission timeout varies for each service, the transmitting terminal cannot set retransmission timeout per service. In other words, setting per communication party is possible, but setting per connection is not possible. Like this, it is not possible to flexibly set retransmission-related parameters.

It is therefore an object of the present invention is to provide a TCP transmission control device and a TCP transmission control method to improve the efficiency of TCP transmission processing in device interaction services on home networks.

### Solution to Problem

The TCP transmission control device according to the present invention that transmits transmission control protocol data to a receiving terminal via a packet network, the transmission control protocol transmission control device adopts a configuration to include: a network determining section that determines whether or not there is the receiving terminal on an internal packet network; and a transmission control protocol transmission control information setting section that sets, for the internal packet network, transmission control protocol transmission control information used in transmission control protocol connection established between the receiving terminal and the transmission control protocol transmission control device, when the receiving terminal is located on the internal packet network.

The TCP transmission control method according to the present invention to transmit transmission control protocol data to a receiving terminal via a packet network, the transmission control protocol transmission control method includes: a determining step of determining whether or not there is the receiving terminal on an internal packet network; and a setting step of setting, for the internal packet network, transmission control protocol transmission control information used in transmission control protocol connection established with respect to the receiving terminal, when the receiving terminal is located on the internal packet network.

### Advantageous Effects of Invention

According to the present invention, TCP transmission control information used for TCP connections established between a receiving terminal and a transmitting terminal is set based on the network to which the receiving terminal belongs, and the transmitting side sets adequate TCP transmission control information according to the packet network to which a communicating party terminal belongs. Therefore, it is possible to perform efficient TCP communication, so that the period of time until retransmission when a packet is lost is significantly reduced. In addition, it is possible to set an adequate TCP parameter per TCP connection by an existing scheme without changing a TCP stack protocol. As a result of this, it is possible to improve the efficiency of TCP communication in home network services.

### Brief Description of Drawings

FIG.1 shows a configuration of a conventional data communication system;
FIG.2 shows a configuration of a conventional home network system;
FIG.3 is a control sequence diagram showing an example of acknowledgement processing operations using conventional TCP;
FIG.4 is a control sequence diagram showing an example of retransmission processing operations by a fast retransmission function using conventional TCP;
FIG.5 explains conventional control of retransmission timeout in the transmitting side according to types of NWs;
FIG.6 shows a configuration of a communication system using a TCP transmission control device according to an embodiment of the present invention;
FIG.7 shows a configuration of the TCP transmission control device according to the embodiment;
FIG.8 shows a setting example of TCP transmission control information per network type of the TCP transmission control device according to the embodiment;
FIG.9 shows a setting example of TCP transmission control information per service type of the TCP transmission control device according to the embodiment;
FIG.10 is a control sequence diagram showing operations of a communication system in the TCP transmission control device according to the embodiment;
FIG.11 is a flowchart showing inside processing in the TCP transmission control device according to the embodiment;
FIG.12 is a flowchart showing internal processing in the TCP transmission control device according to the embodiment; and
FIG.13 explains intermittent traffic in streaming of the TCP transmission control device according to the embodiment.

### Description of Embodiments

Now, embodiments of the present invention will be described in detail with reference to the accompanying drawings.

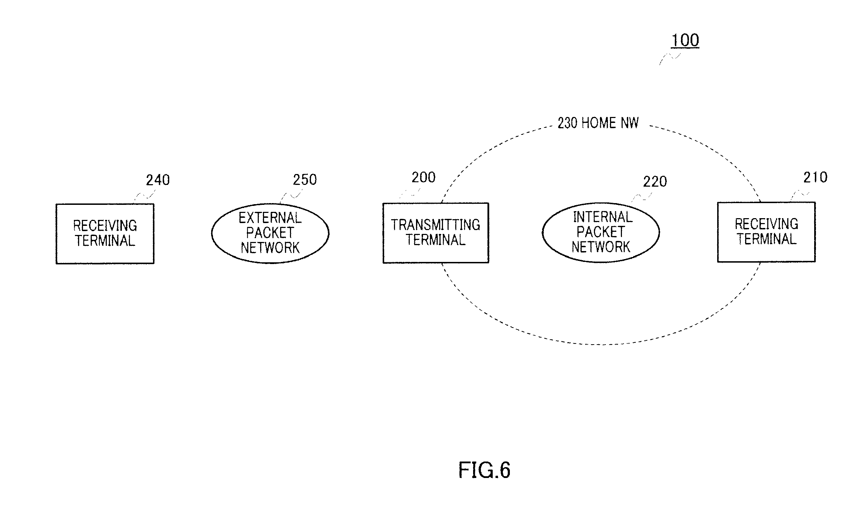

FIG.6 shows a configuration of a communication system using a TCP transmission control device according to an embodiment of the present invention. The TCP transmission control device according to the present embodiment is an example applied to a transmitting terminal on a home NW.

In FIG.6, communication system 100 is configured to include transmitting terminal 200, which is a TCP transmission control device, receiving terminal 210, internal packet network 220 that connects between transmitting terminal 200 and receiving terminal 210 and an external packet network 250 that connects between transmitting terminal 200 and receiving terminal 240.

The above transmitting terminal 200, receiving terminal 210 and internal packet network 220 constitute home NW 230.

Transmitting terminal 200 is located in home NW 230 and delivers data to other communication terminals using TCP, via internal packet network 220 and external packet network 250.

Receiving terminal 210 is located in home NW 230 and receives data delivered according to TCP, via internal packet network 220. Receiving terminal 210 is a embedded terminal or home electric appliance terminal of lower performance than that of a PC and so forth. In general, home electric appliance terminals need to have quality for home electric appliances, not best-effort quality.

Internal packet network 220 is a local packet-switched network including a single or few subnets. To be more specific, internal packet network 220 is a network composed of a hub, switches and APs (access points) for WLAN (wireless LAN.) With the present embodiment, a home NW is assumed as internal packet network 220.

Receiving terminal 240 receives data delivered using TCP through external packet network 250. Receiving terminal 210 and receiving terminal 240 are collectively referred to as receiving terminal 260.

External packet network 250 is a wide area network/ public packet-switched network such as a cellular network using packet switching, and includes a virtual LAN via the Internet. In addition, a network combining a plurality of these is possible. Internal packet 220 and external packet 250 are collectively referred to as packet network 270.

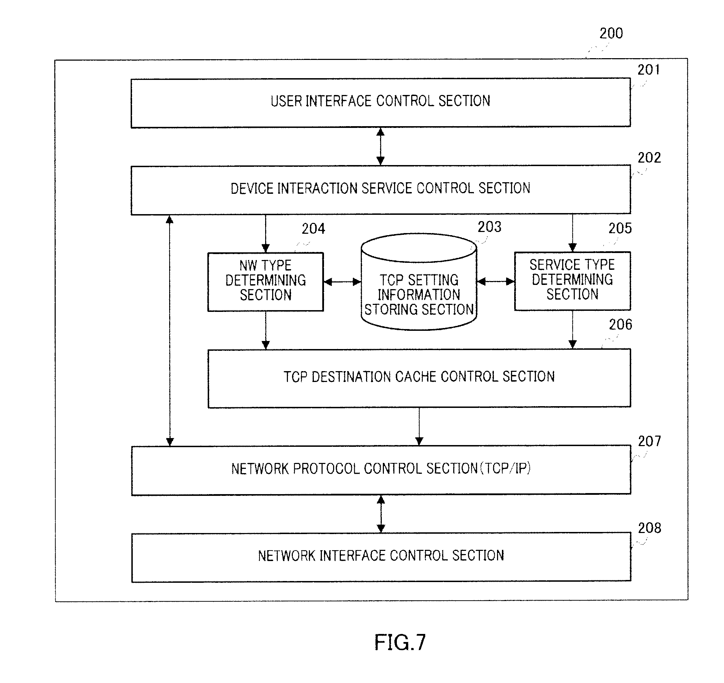

FIG.7 shows a configuration of the above-described transmitting terminal 200.

In FIG.7, transmitting terminal 200 is configured to include user interface control section 201, device interaction service section 202, TCP setting information storing section 203, NW type determining section 204, service type determining section 205, TCP destination cache control section 206, network protocol control section 207 and network interface control section 208.

User interface control section 201 controls input and output of information to the user. User interface control section 201 has a function to accept commands from the user, a function to receive media data such as voice and moving images as input and deliver these to device interaction control section 202 and a function to output information about voice, moving images, text data and so forth received from device interaction service control section 202, to the user. User interface control section 201 is formed by input devices, such as a mouse, a button, a camera, a microphone and so forth and output devices, such as a display, a speaker, LED and so forth.

Device interaction service control section 202 controls device interaction services. Device interaction service control section 202 has a function to accept commands from the user, a function to display service conditions to the user and a function to input and output media data such as voice and video via user interface control section 201.
In addition, device interaction service control section 202 outputs device interaction control data to NW type determining section 204 and service type determining section 205. Device interaction service control section 202 has a function to communicate with terminals in the receiving side via network protocol control section 207, network interface control section 208 and packet network 270 to transmit and receive device interaction control data and transmit voice, video and so forth.

TCP setting information storing section 203 stores TCP transmission control information. TCP transmission control information relates to TCP congestion control algorithm, is configured to be controlled by the TCP transmitting side and is able to be changed by a destination cache function. As long as transmission control information meets these requirements, the name is not limited. For example, the name may be "TCP parameter" and "setting parameter." TCP setting information storing section 203 is accessed by NW type determining section 204 and service type determining section 205, and TCP transmission control information stored in TCP setting information storing section 203 is referred when NW type determining section 204 and service type determining section 205 determine NW types and service types, respectively.

In addition, TCP transmission control information is used basically in the following timing patterns.

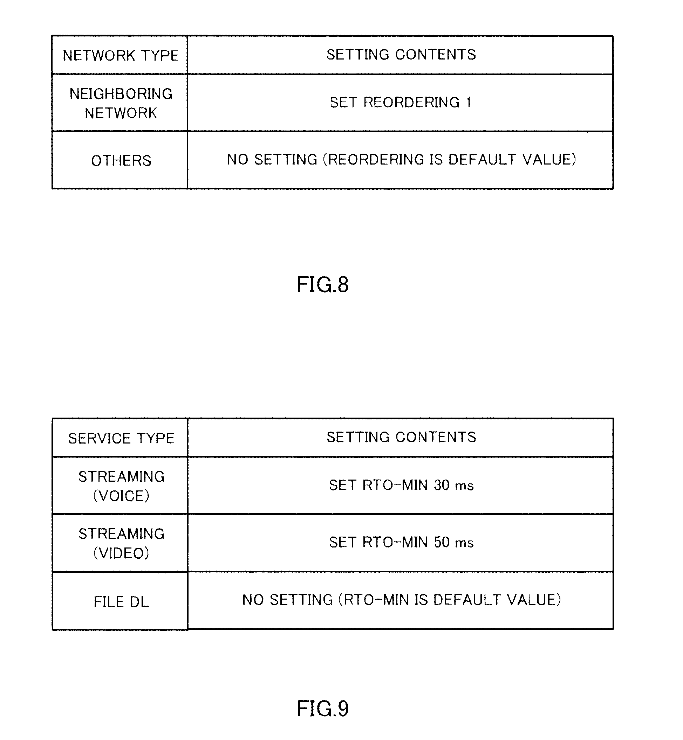

1. At the time a service starts 2. At the time intermittent traffic occurs HTTP (hyper text transfer protocol) streaming and web traffic may be used as examples of services for generating intermittent traffic described as 2. An example of TCP transmission control information will be described later with reference to FIG.8 and FIG.9.

NW type determining section 204 determines TCP parameters based on the type of a network.

Service type determining section 205 determines TCP parameters based on the type of a service.

TCP destination cache control section 206 receives a command from NW type determining section 204 or service type determining section 205 and sets TCP destination cache information for network protocol control section 207.

Network protocol control section 207 is a protocol stack to control TCP/IP (transmission control protocol/ Internet protocol.)
Network protocol control section 207 is a TCP/IP protocol stack, controls delivery data transmitted from device interaction service control section 202, according to a TCP/ IP scheme, and delivers the data to terminals in the receiving side via network interface control section 208 and packet network 270. In general, network protocol control section 207 has algorithms as TCP control functions, such as slow start, congestion avoidance, fast retransmission and fast recovery, and is able to support change in network conditions and packet loss.

In addition, network protocol control section 207 has a function referred to as "destination cache" to save TCP control information used in the first TCP transmission processing on a certain destination and use that information when TCP transmission processing is performed again to the same destination, and therefore improves the efficiency of subsequent TCP communication with the same destination. As examples of information saved as destination cache, there are "maximum transfer size (MTU)," "maximum value of congestion window size (CWND)," "initial value of congestion window size (INITCWIND)," "slow start threshold (SSTHRESH)", "round trip time (RTT)," "minimum value of retransmission timeout (RTO_MIN)," "acceptable maximum number of changes in the order of packets (REORDERING)."

Network interface control section 208 communicates with packet network 270. Network interface control section 208 has a function to transmit data received from network protocol control section 207 to packet network 270 and a function to deliver data received from packet network 270 to network protocol control section 207.

FIG.8 and FIG.9 show examples of TCP transmission control information stored in TCP setting information storing section 203. FIG.8 shows a setting example of TCP transmission control information per network type, and FIG.9 shows a setting example of TCP transmission control information per service type.

TCP transmission control information shown in FIG.8 is TCP setting information relating to TCP congestion control algorithms such as congestion avoidance, fast retransmission, fast recovery, slow start and so forth. This TCP transmission control information per network type is controlled in the TCP data transmitting side. This TCP transmission control information per network type can be changed by a destination cache function.

In addition, in a case of a nearby network such as home NW 230, it is determined that change in the order of packets is less likely to occur, so that the maximum number of changes in the order of packets (REORDERING) that is allowed in the transmitting side, is set one.
As for other networks, a default value for the system is used, and generally, this value is 3. With the present embodiment, this value is changed to 1, so that transmitting terminal 200 allows retransmission of a packet at the time to receive one duplicate acknowledgment for the packet from receiving terminal 260.

TCP transmission control information per service type shown in FIG.9 has following meanings. Voice or video streaming should be performed in real time, and, if retransmission timeout taking into account delay ACK is used, streaming discontinuity is likely to occur. Therefore, for these services, the minimum value of retransmission timeout (RTO_MIN)is set to a small value, so that it is possible to perform early retransmission due to timeout. However, if the minimum value of retransmission timeout is reduced in all communications, unnecessary retransmissions are performed, so that network bands may be tightened. Therefore, as shown in TCP transmission control information per service type in FIG.9, a default value for the system is used for services such as file download, which do not need to be performed in real time and which can be accepted by the receiving side even if the order of receptions changes a little. In general, this default value is equal to or greater than 200 ms.

Now, operations of a communication system having transmitting terminal 200 configured as described above, will be explained.

The inventors paid attention to that home NWs have low delay and jitter although external NWs such as the Internet and a cellular phone network have delay and jitter significantly varying. In addition, in external NWs, it is not possible to specify packet delivery routes, and the order of packet arrivals changes. On the other hand, in home NWs, delay and jitter are low and the order of packets does not change. However, the difference in characteristics that home NWs have small delay and jitter is not taken into account in prior art, and a server function of an external NW is used in a server terminal constituting a home NW as is. That is, a transmitting terminal (server) in prior art has a configuration to perform best-effort data delivery using general TCP transmission control parameters even if it is used in a home NW.

Therefore, TCP transmission processing is not optimized in device interaction services on a home NW, so that the efficiency is not improved. There has been a problem that TCP transmission processing is not optimized on a home NW, for example, it is not possible to set retransmission timeout unless a receiving terminal gives a command using a unique protocol, and it is not possible to set individually per service even if the optimal retransmission timeout varies for each service.

Therefore, the TCP transmission control device according to the present invention determines NW and service based on the content of communication with a receiving terminal, and, when streaming services are performed (transmitted) in a home NW, sets TCP transmission control information used in TCP connection established between the receiving terminal and the TCP transmission control device, according to the network to which the receiving terminal belongs.

Here, NW and service can be determined based on the content of device interaction protocols and so forth.

In addition, as examples of TCP transmission control information to be set, a value of retransmission time out (RTO) or a value of retransmission start threshold (reordering) may be used.

First, operations of transmitting terminal 200 will be described, where transmitting terminal 200 delivers streaming such as video and voice using TCP, to receiving terminal 210.

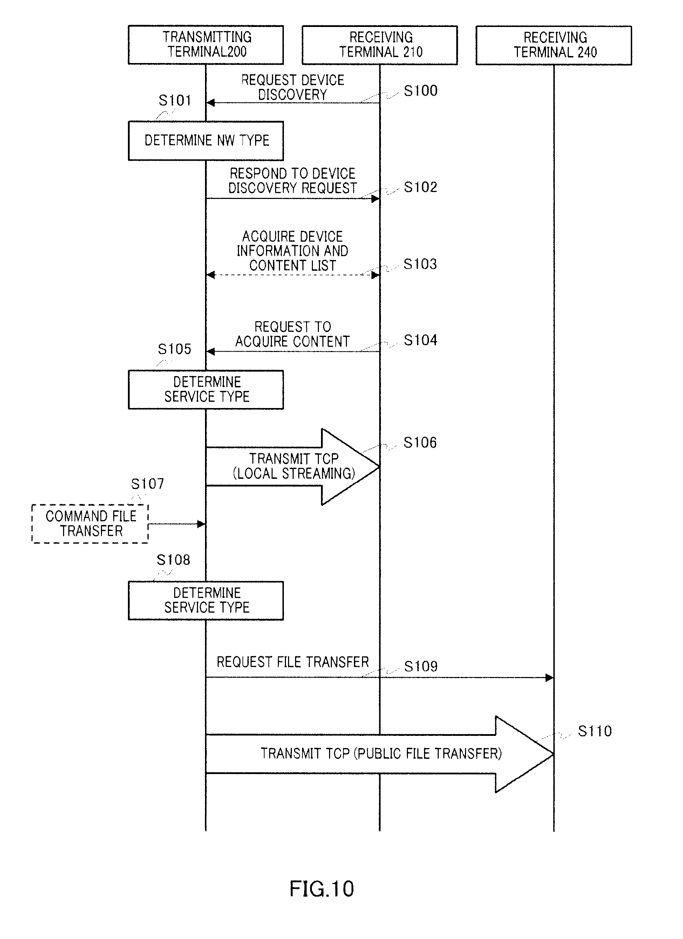

FIG. 10 is a control sequence diagram showing operations of a communication system having transmitting terminal 200, receiving terminal 210 and receiving terminal 240.

Receiving terminal 210 on home NW 230, first, broadcasts a message requesting to discover a device on internal packet network 220 (see S100.) This message is a service discovery message by, for example, SSDP protocol of UPnP (universal plug and play.)

Upon receiving this message, transmitting terminal 200 on internal packet network 220 reports that the device discovery request message has been received from receiving terminal 210, with IP address information of receiving terminal 210, to NW type determining section 204. Upon receiving this report, NW type determining section 204 determines that receiving terminal 210 is a terminal located on this subnet because messages used for device interaction, such as device discovery request, is not transferred outside the subnet (see S102.)

Next, NW type determining section 204 determines the network type based on this determination as follows (see S101.) That is, based on this determination, NW type determining section 204 obtains setting for a terminal of the network type representing a nearby network, from information registered in TCP setting information storing section 203, and reports the setting to TCP destination cache control section 206. Upon receiving the report, TCP destination cache control section 206 sets a TCP destination cache corresponding to the IP address of receiving terminal 210, for network protocol control section 207. As an example for this setting method, a setting method by iproute2 commands utilizable in Linux OS, may be used. With the setting example of TCP transmission control information per network type shown in FIG.8, information indicating that REORDERING (the allowable maximum number of changes in the order of packets) is set one for terminals on a home network. This setting is set in network protocol control section 207, that is, a TCP protocol stack. After that, if TCP connection is established between receiving terminal 210 and transmitting terminal 200, TCP communication reflecting this setting is started. To be more specific, upon receiving one duplicate acknowledgment from receiving terminal 210 during TCP communication with receiving terminal 210, transmitting terminal 200 determines that packet loss has occurred, and therefore is able to perform fast retransmission processing.

After that, various control processing using device interaction protocols such as UPnP is performed between receiving terminal 210 and transmitting terminal 200 (see S103.) To be more specific, receiving terminal 210 obtains device information about transmitting terminal 200, detects transmitting terminal 200 having a streaming delivery function, and then obtains a content list from transmitting terminal 200, based on a command from the user of receiving terminal 210. Then, when the user of receiving terminal 210 requests receiving terminal 210 to start streaming of contents from transmitting terminal 200, receiving terminal 210 issues a message to start transmitting contents, to transmitting terminal 200 (see S104.) To be more specific, this message is realized by a HTTP GET method and so forth and requests transmitting terminal 200 to transfer all or part of contents.

Upon receiving this request, transmitting terminal 200 reports, to service type determining section 205, the content of a service to be started, that is, a video or voice streaming service, and the destination of the service, that is, address information (IP address and port number) of receiving terminal 210. Upon receiving this report, service type determining section 205 obtains setting related to streaming services from TCP setting information storing section 203 and commands TCP destination cache control section 206 to set a destination cache for the designated address information (see S105.)

Upon receiving this command, TCP destination cache control section 206 changes, to the designated content, the content of the destination cache for the designated address information, that is, the IP address and port number used by receiving terminal 240 to receive this streaming service. In a case of each streaming service as shown in a setting example of TCP transmission control information per service types in FIG.9, the minimum value of retransmission timeout (RTO_MIN) is set to a smaller value than the value used in conventional TCP, to be more specific, set to 30 ms for voice and 50 ms for video. Among destination caches for IP addresses and port numbers used by receiving terminal 210 to receive these streaming services, the minimum value of retransmission timeout is set to the above-described smaller values.

By the above-described processing, in the streaming service from transmitting terminal 200 to receiving terminal 210 that is to be started after this (see S106), retransmission timeout is shorter than conventional TCP and retransmission processing at the time timeout occurs is faster.

Next, operations of transmitting terminal 200 will be described with reference to a sequence diagram of FIG.10, where transmitting terminal 200 transfers file data to receiving terminal 240 using TCP.

Transmitting terminal 200 is commanded from the user operating transmitting terminal 200 or controlled by another terminal on an internal packet network to upload files to a server on the Internet, here, receiving terminal 240 on an external packet network (see S107.)

Upon receiving the command, transmitting terminal 200 reports, to service type determining section 205, the content of the service to be started, that is, file transfer, and the destination of the service, that is, address information (IP address and port number) of receiving terminal 240. Upon receiving this report, service type determining section 205 obtains setting related to a file transfer service, from TCP setting information storing section 203 (see S108.)
Here, as shown in TCP transmission control information per service type in FIG.9, in a case of file transfer, any special setting is not set and a default value is used as the minimum value for retransmission timeout. Therefore, a file transfer service for receiving terminal 240 using TCP starts without a command to TCP destination cache control section 206 (see S109 and S110.)

As a result of this, in a file transfer service to receiving terminal 240, the same retransmission processing parameters (the acceptable maximum number of changes in the order of packets and the minimum value of retransmission timeout) as in conventional TCP while any special setting is not applied to the IP address of receiving terminal 240 and the protocol number used in the service.

Operations of transmitting terminal 200 have been described, where transmitting terminal 200 delivers streaming of video, voice and so forth, to receiving terminal 210 on an internal packet network, using TCP, and where transmitting terminal 200 transfers file data to receiving terminal 240 on an external packet network, using TCP.

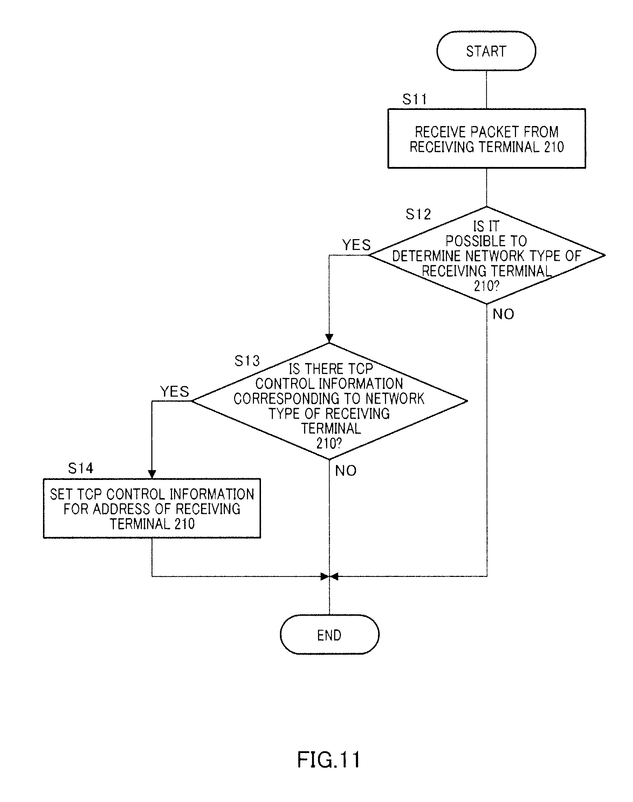

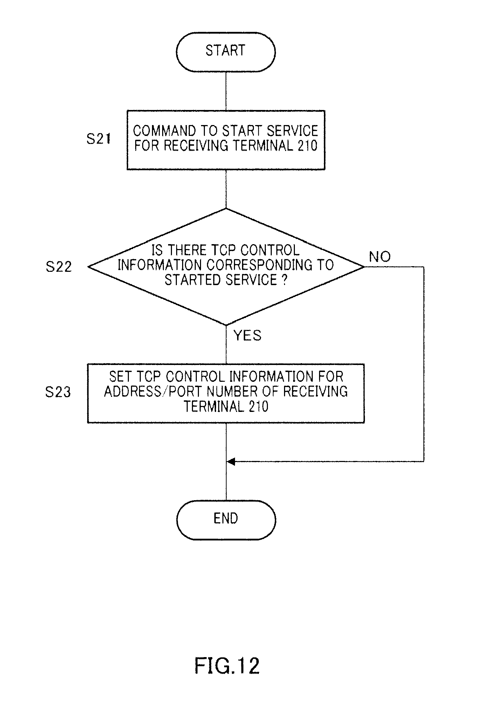

Next, an internal processing flow including network type determination (S102) performed when transmitting terminal 200 receives a message from a terminal, and service type determination (S105 and S107) performed at the time to start a service, will be described in detail, with reference to FIG.11 and FIG.12.

FIG.11 and FIG.12 are flowcharts showing internal processing in transmitting terminal 200.

As shown in FIG.11, in step S11, transmitting terminal 200 receives a packet from receiving terminal 210.

In step S12, transmitting terminal 200 judges whether or not it is possible to determine the network type of receiving terminal 210, and, when judging that determination is impossible, ends the processing.
Here, it is judged that receiving terminal 210 is located on internal packet network 220 because the packet received from receiving terminal 260 is a UPnP service discovery message (YES in step S12.)

In step S13, transmitting terminal 200 checks if there is TCP transmission control information corresponding to the network type of receiving terminal 210, based on the content of TCP setting information storing section 203, and, when there is no corresponding TCP transmission control information, ends the processing. Here, it is judged that there is TCP transmission control information corresponding to the network type of receiving terminal 210 (YES in step S13.)

In step S 14, transmitting terminal 200 needs to set the value of REORDERING to 1 in TCP setting information storing section, as information corresponding to internal packet network 220, and therefore set this content as a TCP destination cache and ends this flow.

As shown in FIG.12, in step S21, transmitting terminal 200 receives a command to start a service by TCP transmission, by a request from receiving terminal 210 or by a command from the user of transmitting terminal 200.

In step S22, transmitting terminal 200 judges whether or not there is TCP transmission control information corresponding to the type of a service to be started, based on the content of TCP setting information storing section 203. When there is TCP transmission control information corresponding to the type of a service to be started, transmitting terminal 200 moves the step to step S23, and, on the other hand, when there is no TCP transmission control information corresponding to the type of a service to be started, ends this flow.

Here, upon receiving a content acquisition request (see S104 in FIG.10) from receiving terminal 210, transmitting terminal 200 starts a streaming service.

In step S23, transmitting terminal 200 acquires the value of RTO_MIN from TCP setting information storing section 203 and sets this content as a TCP destination cache. In addition, when starting a file download service for receiving terminal 240 by receiving a command from the user of transmitting terminal 200, transmitting terminal 200 can understand that there is no content to be set by referring to TCP setting information storing section 203, and therefore does nothing and ends the processing.

As described above in detail, according to the present embodiment, when receiving terminal 210 is located on internal packet network 220, TCP destination cache control section 206 in transmitting terminal 200 (TCP transmission control device) sets TCP transmission control information used in TCP connection established between receiving terminals 210 and transmitting terminal 200, for internal packet network 220, so that the transmitting side can set adequate TCP transmission control information according to the packet network to which a communicating party terminal belongs, to perform efficient TCP communication.

In addition, TCP destination cache control section 206 sets the above-described TCP transmission control information according to the type of a service provided by TCP data transmission, so that the transmitting side can set adequate TCP transmission control information according to the packet network to which a communicating party belongs, and the type of communication with a communication party's terminal to perform efficient TCP communication.

Moreover, NW type determining section 204 makes a decision based on reception of a device interaction message from a receiving terminal, so that the transmitting side can set adequate TCP transmission control information according to the packet network to which a communicating party belongs, to perform efficient TCP communication without requiring command packets from a receiving terminal.

Furthermore, NW type determining section 204 receives a device interaction message from a receiving terminal and determines whether or not there is the receiving terminal on an internal packet network, so that the transmitting side can set adequate TCP transmission control information according to the packet network to which a communication party belongs, to perform efficient TCP communication without requiring command packets from the receiving terminal.

Moreover, TCP transmission control information to be set is the minimum value of retransmission timeout, so that it is possible to significantly reduce waiting time until TCP data is retransmitted on one packet network.

Furthermore, TCP transmission control information to be set is the allowable maximum number of changes in the order of packets, it is possible to significantly reduce waiting time until TCP data is retransmitted on one packet network.

As described above, according to the present embodiment, it is possible to set the optimum TCP retransmission processing parameter to perform streaming to receiving terminal 260 on internal packet network 220, based on communication processing performed between transmitting terminal 200 and receiving terminal 210 and the content of services provided. As a result of this, in streaming services from transmitting terminal 200 to receiving terminal 210 using TCP, it is possible to perform retransmission processing faster at the time of occurrence of packet loss.

The above description is illustration of preferred embodiments of the present invention and the scope of the invention is not limited to this.

Although only retransmission timeout (RTO) and the allowable maximum number of changes in the order of packets (REORDERING) are used as TCP transmission control information in the above-described embodiment, other parameters that can be set by a TCP destination cache function may be set. For example, for transmission to receiving terminal 210, a greater value than a normal value is set as the initial value of a slow start threshold (SSTHRESH.)
By this means, it is possible to increase the throughput early by TCP slow start in communication on internal packet network 220 having a wide band and exhibiting a low incidence of packet loss.

In addition, although the timing of network type determination is the time to receive a packet from receiving terminal 260 in the present embodiment, network type determination may be performed at other timings. For example, if the number of hops (metric value) in a routing table held by a transmitting terminal or a gateway used by the transmitting terminal is equal to or smaller than a certain number, it may be determined that the destination is a terminal on internal packet network 220. Alternately, it may be determined that the destination is a terminal on internal packet network 220 because the destination address is the same subnet as that of a transmitting terminal.

In addition, although the present embodiment adopts a configuration in which network type determination and service type determination are performed at different timings, these determinations may be performed at the same time.

Moreover, although the present embodiment adopts a configuration in which TCP transmission control information is set at the time to start services between transmitting terminal 200 and receiving terminal 260, as for services in which TCP traffic occurs intermittently, a configuration in which TCP transmission control information is set every time TCP traffic occurs, may be adopted.

For example, in streaming using HTTP, transmitting terminal 200 normally repeats operations including transmitting a chunk of data per certain interval about hundreds ms and stopping transmission until the next transmission interval after the transmission of that size of data.
In a case of this service, different values are used between the time to start data transfer in a certain interval and the time to start data transfer in the next interval because TCP transmission control information is recalculated between the above two intervals. For example, during continuous data transfer, a TCP stack in the transmitting side gradually increases the size of congestion window unless packet loss occurs. On the other hand, in an interval in which communication is not performed after termination of data transfer, a TCP stack in the transmitting side generally performs processing, including gradually reducing the size of congestion window (that is, congestion window validation.)

Therefore, problems may occur where a large amount of data is transmitted from transmitting terminal 200 to receiving terminal 260 in the receiving side at a burst because the size of congestion window is too large at the timing to start transmission at each interval, and, inversely, where it is not possible to acquire anticipated throughput because the size of congestion window is too small.

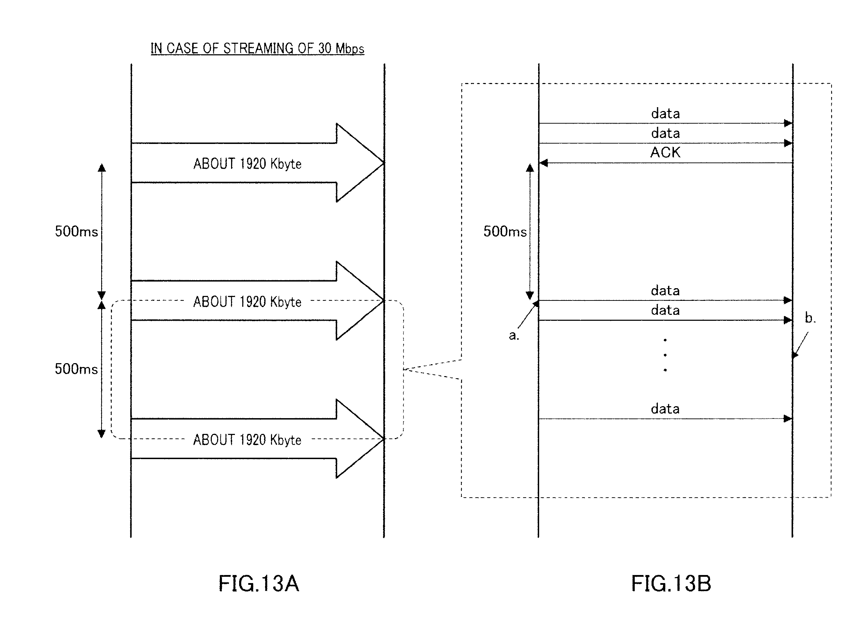

FIG.13 explains intermittent traffic in the above-described streaming using HTTP, here, streaming of 30 Mbps is used as an example. FIG.13A shows an example of intermittent transmission of data about 1,920 Kbyte at intervals of 500 ms. FIG.13B shows detailed conditions of data transmission shown in FIG.13A.

As shown in FIG.13, in streaming using HTTP (hyper text transfer protocol), operations are repeated, including transmitting a certain chunk of data per certain interval (e.g. 500 ms) in general and stopping transmission until the next transmission timing after the transmission of that size of data. Therefore, at each transmission timing, the amount of data equivalent to the size of congestion window at the previous ending time is transmitted at a time, so that the receiving side receives packets at a burst. For example, as indicated by a. in FIG.13B, the transmitting side may continuously send out a number of packets equivalent to the size of congestion window at the previous ending time. In this case, as indicated by b. in FIG.13B, it is possible to increase processing load and influence an AV playback function and so forth by continuously receiving a large amount of packets in the receiving side.

When the present invention is applied to intermittent traffic in streaming, it is possible to start TCP transmission in each interval while reflecting adequate setting, by setting TCP transmission control information set at the time to start services between transmitting terminal 200 and receiving terminal 260 every time transmission at each interval starts in FIG.6.

When this setting is applied, a configuration may be adopted where device interaction service control section 202 designates setting content to a TCP destination cache control section via NW type determining section 204 and service type determining section 205 each time, or a configuration may be adopted where a function to report the first setting content to NW type determining section 204 and service type determining section 205 is added to device interaction service control section 202, so that, in subsequent setting, device interaction service control section 202 may indicate the reported setting content directly to TCP destination cache control section 206.

As described above, a configuration is adopted where TCP transmission control information is set not only at the time to start services but also every time TCP traffic occurs, so that it is possible to prevent the above-described problems, and therefore to realize TCP transmission control appropriate to services to generate intermittent traffic, such as streaming and web services by HTTP.

In addition, by adopting a configuration in which TCP transmission control information is the size of congestion window and the slow start threshold, it is possible to prevent packets from being transmitted at a burst in TCP transmission generated intermittently on one packet network and to ensure the adequate throughput.

Although the names "TCP transmission control device" and "TCP transmission control method" are used in the present embodiments for ease of explanation, "transmitting terminal device", "server terminal" and "communication system" are possible as the device name, and "transmission control method" and so forth may be possible as the method name.

In addition, the type, the number, the connection method and so forth of each of parts constituting the above-described TCP transmission control device, such as a network protocol control section, are not limited.

In addition, the above-described TCP transmission control method may be realized by a program to operate this TCP transmission control method. This program is stored in a computer-readable storage medium.

Each function block in transmitting terminal 200 may be implemented as an LSI constituted by an integrated circuit. These may be individual chips or partially or totally contained on a single chip.
"LSI" is adopted here but this may also be referred to as "IC," "system LSI," "super LSI," or "ultra LSI" depending on differing extents of integration.

Further, the method of circuit integration is not limited to LSI's, and implementation using dedicated circuitry or general purpose processors is also possible. After LSI manufacture, utilization of a programmable FPGA (Field Programmable Gate Array) or a reconfigurable processor where connections and settings of circuit cells within an LSI can be reconfigured is also possible.

Further, if integrated circuit technology comes out to replace LSI's as a result of the advancement of semiconductor technology or a derivative other technology, it is naturally also possible to carry out function block integration using this technology. Application of biotechnology is also possible.

Although the present invention has been described in detail with reference to the specific embodiment, it is obvious for one of skill in the art that the present invention can be variously changed and modified without departing from the spilt and scope of the present invention.

The disclosure of Japanese Patent Application No.2008-196874, filed on July 30, 2008, including the specification, drawings and abstract, is incorporated herein by reference in its entirety.

### Industrial Applicability

The TCP transmission control device and the TCP transmission control method according to the present invention have advantages of improving the efficiency of TCP transmission processing when streaming services using TCP are performed on an internal packet network such as a home NW, and are useful for home electric appliances and so forth having TCP/IP communication capabilities. In addition, it is possible to apply to a vehicle communication device that is connected in a vehicle LAN and performs TCP/IP communication, a mobile telephone having a home network communication interface and so forth.

## Claims

1. A transmission control protocol transmission control device that transmits transmission control protocol data to a receiving terminal via a packet network, the transmission control protocol transmission control device comprising:
a network determining section that determines whether or not there is the receiving terminal on an internal packet network; and
a transmission control protocol transmission control information setting section that sets, for the internal packet network, transmission control protocol transmission control information used in transmission control protocol connection established between the receiving terminal and the transmission control protocol transmission control device, when the receiving terminal is located on the internal packet network.

2. The transmission control protocol transmission control device according to claim 1, wherein the transmission control protocol transmission control information setting section sets the transmission control protocol transmission control information, based on a service type realized by transmission control protocol data transmission.

3. The transmission control protocol transmission control device according to claim 1, wherein the transmission control protocol transmission control information setting section sets the transmission control protocol transmission control information at a time a service starts, or intermittent traffic occurs.

4. The transmission control protocol transmission control device according to claim 1, wherein the receiving network determining section determines whether or not the receiving terminal is located on the internal packet network by receiving a device interaction message from the receiving terminal.

5. The transmission control protocol transmission control device according to claim 1, wherein the receiving network determining section determines whether or not the receiving terminal is located on the internal packet network, based on address routing information about the receiving terminal.

6. The transmission control protocol transmission control device according to claim 1, wherein the internal packet network is a local packet network including a single or few subnets.

7. The transmission control protocol transmission control device according to claim 1, wherein the transmission control protocol transmission control information is setting information that relates to a transmission control protocol congestion control algorithm, is controlled by a transmission control protocol transmitting side and is able to be changed by a destination cache function.

8. The transmission control protocol transmission control device according to claim 1 , wherein the transmission control protocol transmission control information is a minimum value of retransmission timeout.

9. The transmission control protocol transmission control device according to claim 1, wherein the transmission control protocol transmission control information is an allowable maximum number of changes in an order of packets.

10. The transmission control protocol transmission control device according to claim 1, wherein the transmission control protocol transmission control information is a size of a congestion window.

11. The transmission control protocol transmission control device according to claim 1, wherein the transmission control protocol transmission control information is a slow start threshold.

12. A transmission control protocol transmission control method of transmitting transmission control protocol data to a receiving terminal via a packet network, the transmission control protocol transmission control method comprising:
a determining step of determining whether or not there is the receiving terminal on an internal packet network; and
a setting step of setting, for the internal packet network, transmission control protocol transmission control information used in transmission control protocol connection established with respect to the receiving terminal, when the receiving terminal is located on the internal packet network.

13. The transmission control protocol transmission control method according to claim 12, wherein the setting step sets the transmission control protocol transmission control information, based on a service type realized by transmission control protocol data transmission.

14. The transmission control protocol transmission control method according to claim 12, wherein the setting step sets the transmission control protocol transmission control information at a time a service starts or intermittent traffic occurs.
